# EUROPÄISCHE PATENTANMELDUNG

(11) **EP 0 564 889 A1**
(43) Veröffentlichungstag der Anmeldung: **13.10.1993**
(21) Anmeldenummer: 93104714.6
(22) Anmeldetag: 23.03.1993
(51) Int. Cl.: F16B 7/02

(54) **Verbindungseinrichtung für ein insbesondere rohrförmiges Bauteil**

(30) Priorität: 27.03.1992 DE 9204194 U; 31.03.1992 DE 4210488
(71) Anmelder: HEWI HEINRICH WILKE GMBH, D-34454 Arolsen (DE)
(72) Erfinder: Dziuk, Richard, W-3548 Arolsen (DE); Wulfert, Karl-Ludwig, W-3544 Waldeck (DE); Jäger, Horst, W-3593 Edertal-Buhlen (DE)
(74) Vertreter: Freiherr von Schorlemer, Reinfried

(57) **Zusammenfassung**

Die Erfindung betrifft eine Verbindungseinrichtung für ein insbesondere rohrförmiges Bauteil (22), das wenigstens ein eine Ausnehmung (21) aufweisendes Anschlußende besitzt, das mittels einer unsichtbaren, vorzugsweise durch Schrauben herstellbaren Verbindung unter Bildung einer Stoßfuge (37) mit einem Anschlußende eines anderen Bauteils (32) verbindbar ist. Zwecks einfacher Montage und Demontage enthält die Verbindungseinrichtung ein in die Ausnehmung einsetzbares, spreizbares, hülsenförmig ausgebildetes Teil (1) , ein Spreizteil (17) mit einer Spreizfläche, die mit einer entsprechend ausgebildeten Fläche des spreizbaren Teils großflächig zusammenwirkt, und einen zum Festziehen des Spreizteils im spreizbaren Teil bestimmten Bolzen (10), der als durchgehender Gewindebolzen ausgebildet und zweckmäßig in einen Innengewindeabschnitt des Spreizteils eingedreht wird. Damit der Bolzen (10) nach dem Festziehen des Spreizteils nicht ohne weiteres wieder zurückgedreht werden kann, ist das Spreizteil (17) und/oder der Bolzen 10 vorzugsweise mit einer ersten, ein Zurückdrehen des Bolzens (10) erschwerenden oder verhindernden Drehsicherung versehen. Dadurch ist es möglich, den Bolzen (10) z.B. als normalen Gewindebolzen auszubilden. Nach dem Eindrehen dieses Gewindebolzens in das Spreizteil kann dieses z.B. dadurch im spreizbaren Teil festgezogen werden, daß auf den Bolzen mittels eines Elektroschraubers eine definierte Zugkraft ausgeübt wird.

## Beschreibung

Die Erfindung betrifft eine Verbindungseinrichtung der im Oberbegriff des Anspruchs 1 angegebenen Gattung.

Verbindungseinrichtungen dieser Art dienen vor allem zur Verbindung der Bauteile von baukastenartig aus Rohr- oder Stangen- und Knotenelementen bestehenden Rohr- bzw. Stangensystemen. Aus den Elementen des Baukastens können z.B. Dekorations- oder Möbelgestelle, Messe- und Ausstellungsstände, Rahmen, Pendeltürgriffe, Griffstangen, Möbelstücke, Geländer oder Handläufe und zahlreiche andere Gebilde zusammengesetzt werden. Alternativ können die Verbindungseinrichtungen aber auch zur Verbindung anderer Bauteile verwendet werden, sofern diese mit Aufnahmeöffnungen versehene Anschlußenden aufweisen.

Zur Montage der verschiedenen Elemente eines derartigen Rohr- oder Stangensystems werden heute allgemein Verbindungseinrichtungen angewendet (DE-OS 26 32 696, DE-OS 34 09 866), die in die Aufnahmeöffnungen eingesetzte, an Füllstücken, Buchsen od. dgl. ausgebildete Gewindeteile aufweisen, die mit einem komplementären, im anderen Bauteil vorgesehenen Gewindeteil verschraubt werden. Derartige Verbindungseinrichtungen erfordern entweder eine spezielle Vorbehandlung der Anschlußenden, z.B. die Anbringung einer Einziehung, einer Einstechung, einer Bördelung od. dgl., oder müssen in den Anschlußenden durch Verstiftung, Verklebung, Vernietung od. dgl. befestigt werden. Dabei dienen häufig aus Kunststoffunmantelungen herausragende Teile von Metalleinlagen als Zentrierstücke.

Eine Folge davon ist, daß die Rohr- und Knotenelemente bereits in der Fabrik auf die im Einzelfall erforderliche oder gewünschte Länge geschnitten und mit den Verbindungseinrichtungen fest verbunden werden.

Aufgrund der vielseitigen Anwendungsmöglichkeiten solcher Systeme kann es vorkommen, daß Rohr- oder Stangenelemente eine geringfügig größere oder kleinere Länge haben, als tatsächlich erforderlich oder aufgrund von schon angebrachten Montagelöchern oder anderen Befestigungspunkten erwünscht ist. Da die Verbindungseinrichtungen fest in den Anschlußenden verankert sind, können solche Rohr- oder Stangenelemente an der Baustelle in der Regel nicht auf eine andere Länge abgeschnitten oder verlängert werden. Zur Verkürzung wäre es nämlich erforderlich, zunächst die komplette Verbindungseinrichtung zerstörungsfrei aus dem Anschlußende zu entfernen, was nicht immer möglich ist, anschließend die Kunststoffummantelung von der Stahleinlage abzuziehen, was mit Schwierigkeiten verbunden ist, weil sie zur Herstellung eines drehfesten Sitzes meistens mit hoher Pressung auf die Metalleinlagen aufgezogen ist, dann die Kunststoffummantelung und die Metalleinlage auf die erforderliche Länge zu schneiden und erneut miteinander zu verbinden, und schließlich eine ggfs. neue Verbindungseinrichtung im Anschlußende zu befestigen. Zur Verlängerung wäre es dagegen erforderlich, ein kurzes Rohrstück zusätzlich einzufügen, wozu aus statischen Gründen eine zusätzliche Zentrierhülse benötigt würde, sofern die Länge des Gewindeteils der vorhandenen Verbindungseinrichtung eine derartige Verlängerung überhaupt zuläßt.

Da wegen fehlender Werkzeuge und Ersatzteile derartige Arbeiten an der Baustelle meistens nicht durchführbar sind, ist es in solchen Fällen üblich, beim Hersteller ein neues Rohr- oder Stangenelement mit der erforderlichen oder gewünschten Länge anzufordern. Die dadurch an der Baustelle auftretenden Verzögerungen bei der Montage müssen in Kauf genommen werden.

Angesichts dieses Problems besteht ein erheblicher Bedarf an Verbindungseinrichtungen, die an der Baustelle mit einfachsten Mitteln, schnell und zerstörungsfrei aus den Anschlußenden entfernt und wieder in diese eingesetzt werden können und nach Möglichkeit so gestaltet sind, daß beim Verkürzen eines Rohr- oder Stangenelements ein Abziehen der Kunststoffummantelung von der Metalleinlage nicht erforderlich ist und beim Verlängern eines Rohr- oder Stangenelements keine zusätzliche Zentrierhülse benötigt wird.

Bekannte Verbindungseinrichtungen, mit denen dieses Problem im Prinzip gelöst werden könnte, sind aus verschiedenen Gründen bei den hier interessierenden Rohr- oder Stangensystemen nicht anwendbar.

Bei einer bekannten Verbindungseinrichtung der eingangs bezeichneten Gattung (DE-PS 864 783) besteht das Spreizteil aus dem Kopf, das Gewindeteil aus dem Gewindeschaft und das Mittel zum Ansetzen eines Werkzeugs aus einem Vierkantabschnitt einer Schraube. Eine Verspannung des als schmaler Ring ausgebildeten spreizbaren Teils in dem Anschlußende des einen Bauteils ist nur dadurch möglich, daß gleichzeitig die Schraubverbindung zwischen dem Bauteil und einem anderen Bauteil hergestellt wird, indem der Gewindeschaft der Schraube mittels eines Werkzeugs in ein mit Innengewinde versehenes Anschlußende des anderen Bauteils eingedreht wird. Dabei kann das Werkzeug unmittelbar am dazu vorgesehenen Mittel oder mittelbar an einer auf den Vierkantabscbnitt aufgesetzten, ein entsprechendes Vierkantloch aufweisenden Scheibe angesetzt werden. Bei dieser Konstruktion ist es daher nicht möglich, die Verbindungseinrichtung vor Herstellung der Schraubverbindung an einem der beteiligten Bauteile zu befestigen. Dadurch ist eine Vormontage z.B. im Werk unmöglich, was lange Montagezeiten an der Baustelle erforderlich macht. Außerdem müssen bei der Lagerhaltung, beim Transport usw. viele lose Einzelteile berücksichtigt werden. Weiterhin muß in Kauf genommen werden, daß die Bauteile nicht unmittelbar aneinandergrenzen, sondern entweder durch einen den Vierkantabschnitt freilassenden Spalt oder die darauf aufgezogene Scheibe getrennt sind. Angesehen davon dürfte die mit einem Schraubenkopf aufbringbare Radialkraft aus statischen Gründen bei den meisten praktischen Anwendungsfällen viel zu klein sein, zumal der Schraubenkopf mit dem spreizbaren Teil nur Linienberührung hat. Zur Verlängerung sind außerdem zusätzliche Zentrierstücke erforderlich.

Eine andere bekannte, für den genannten Zweck ebenfalls prinzipiell geeignete Verbindungseinrichtung (FR-PS 1 101 663) weist diese Nachteile teilweise nicht auf - Bei dieser Verbindungseinrichtung sind jedoch anstelle des Spreizteils und des spreizbaren Teils zwei nach Art von Tellerfedern ausgebildete Unterlegscheiben vorgesehen, die mittels eines Gewindebolzens gegeneinander gezogen und dadurch aufgeweitet und im Anschlußende verspannt werden. Daher lassen sich keine großen Kräfte übertragen, so daß diese Verbindungseinrichtung aus statischen Gründen insbesondere nicht für Geländer, Brüstungen od. dgl. geeignet ist. Außerdem dürfte es bei diesen Verbindungseinrichtungen zumindestens bei runden Querschnitten unmöglich sein, die beiden Unterlegscheiben gegeneinander zu ziehen bzw. im Anschlußende zu verspannen, weil sie sich, selbst wenn rauhe Oberflächen vorhanden sind, mit dem Gewindebolzen mitdrehen werden und dadurch die gewünschte Verspannung verhindern. Weiterhin ist die Verbindungseinrichtung äußerst empfindlich gegenüber auf den Bolzen ausgeübte "Kippkräfte". Hinzu kommt, daß diese Verbindungseinrichtung auch den wesentlichen Nachteil aufweist, daß sie nur einmal verwendbar ist. Da sich die Unterlegscheiben bei der Herstellung der Verspannung verformen und in die Rohrwandung eingraben, sind sie nach dem Lösen einer einmal hergestellten Verbindung und Herausnahme aus dem Anschlußende unbrauchbar. Schließlich dürften derartige Verbindungseinrichtungen kaum für die Herstellung solcher Gebilde brauchbar sein, die ein auch im Brandfall erhalten bleibendes, tragendes Metallskelett aufweisen müssen, weil sich die dünnen Unterlegscheiben bei größerer Hitze verformen und dadurch die Schraubverbindung aufheben.

Schließlich ist bereits vorgeschlagen worden (deutsche Patentanmeldung P 40 30 978 derselben Anmelderin), bei der eingangs bezeichneten Verbindungseinrichtung das spreizbare Teil hülsenförmig auszubilden und mit einer Fläche zu versehen, die mit einer Spreizfläche des Spreizteils großflächig zusammenwirkt und an diese Spreizfläche angepaßt ist. Um bei dieser Verbindungseinrichtung ein einfaches und sicheres Festziehen des Spreizteils im spreizbaren Teil bzw. des spreizbaren Teils in der Ausnehmung zu ermöglichen und zu vermeiden, daß sich der Bolzen beim Herstellen oder Lösen einer Verbindung zwischen zwei Bauteilen ungewollt mitdreht, ist dem Bolzen zweckmäßig ein die Verspannung der Verbindung ermöglichendes Element zugeordnet, das aus einer Mutter oder einem starr am Bolzen befestigten Ansatz bzw. Bund besteht. Alternativ kann der Bolzen auch mit dem Spreizteil aus einem Stück hergestellt sein. Außerdem ist der Bolzen mit einem zur Herstellung der Verbindung bestimmten Teil und einem Mittel zum Ansetzen eines Werkzeugs versehen. Der Bolzen ist daher ein vergleichsweise teures Einzelteil, das erheblich zu den Gesamtkosten der Verbindungseinrichtung beiträgt.

Der Erfindung liegt daher die Aufgabe zugrunde, die Verbindungseinrichtung der eingangs bezeichneten Gattung dadurch zu verbessern, daß sie ohne Zuhilfenahme eines anderen Bauteils im Anschlußende montierbar und zerstörungsfrei demontierbar ist und dadurch insbesondere ein einfaches Verkürzen oder Verlängern der beteiligten Bauteile ermöglicht. Daneben soll es möglich sein, die Anschlußenden der Bauteile entweder unter Bildung einer Stoßfuge unmittelbar oder unter Zwischenschaltung eines dritten, rohrförmigen Bauteils und Bildung einer weiteren Stoßfuge mittelbar miteinander zu verbinden. Schließlich soll als Bolzen auch ein einfaches, preisgünstiges Einzelteil verwendet werden können.

Zur Lösung dieser Aufgabe dienen die kennzeichnenden Merkmale des Anspruchs 1.

Durch die Erfindung ergeben sich zahlreiche wesentliche Vorteile.

Die Verbindungseinrichtung kann z.B. vor der Verbindung von zwei Bauteilen in einem Anschlußende eines der Bauteile fest verankert und daher im Werk vormontiert werden. Die Verbindungseinrichtung kann aber dennoch sowohl im Werk als auch an der Baustelle leicht wieder demontiert und z.B. nach Verkürzung des Bauteils erneut montiert werden. Auch eine begrenzte Verlängerung des Bauteils ist möglich, indem zusätzlich ein kürzeres Rohrelement zwischengeschaltet und die Verbindungseinrichtung bei Bedarf im zugehörigen Anschlußende geringfügig axial nach vorn vorgeschoben wird. Schließlich ergibt sich für den Hersteller und den Betreiber der Baukastensysteme der Vorteil, daß die Bauteile, insbesondere Rohrelemente, mit einer geringfügigen Überlänge bestellt und/oder ausgeliefert und an der Baustelle auf die im Einzelfall gewünschte Länge abgeschnitten werden können. Wird dabei die Verbindungseinrichtung in weiterer Ausgestaltung der Erfindung zusätzlich mit einem als Zentrierstück geeigneten Ansatz versehen, kann das Ablängen der Bauteile ohne weiteres auch ohne vorherige Demontage der Kunststoffummantelung von der Metalleinlage erfolgen. Daneben ist es selbstverständlich möglich, die Rohr- oder Stangen- und Knotenelemente wie bisher unter Bildung feiner Stoßfugen und oberflächenbündig so zu verbinden, daß schon aus geringer Entfernung keinerlei Unstetigkeiten an den Verbindungsstellen sichtbar sind. Schließlich kann als Bolzen ein einfacher Gewindebolzen verwendet werden, der von einer serienmäßig hergestellten Gewindestange abgeschnitten ist.

Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen:
- Fig. 1 bis 3: ein spreizbares Teil einer Verbindungseinrichtung nach einer ersten Ausführungsform der Erfindung in einer Vorderansicht, im Längsschnitt und in der Unteransicht etwa im Maßstab 2:1;
- Fig. 4 und 5: einen Bolzen der Verbindungseinrichtung in einer Vorderansicht und in der Draufsicht, ebenfalls etwa im Maßstab 2:1;
- Fig. 6 und 6a: je einen Längsschnitt durch ein Spreizteil der Verbindungseinrichtung, ebenfalls etwa im Maßstab 2:1;
- Fig. 7: die Verbindungseinrichtung nach Fig. 1 bis 6 bei ihrem Einbau in ein Anschlußende eines Bauteils im Längsschnitt;
- Fig. 7A und 7B: der Fig. 7 entsprechende Ansichten nach Verkürzung bzw. Verlängerung des mit der Verbindungseinrichtung verbundenen Bauteils;
- Fig. 8 bis 10: jeweils verschiedene Ausführungsformen von Bauteilen, die mittels der Verbindungseinrichtung nach Fig. 1 bis 6a durch eine unsichtbare Schraubverbindung miteinander verbunden sind, jeweils im Längsschnitt und in einem gegenüber Fig. 1 bis 7B verkleinertem Maßstab;
- Fig. 11: die Verbindungseinrichtung nach Fig. 1 bis 5 und 6a bei ihrem Einbau in ein Anschlußende eines Bauteils im Längsschnitt;
- Fig. 12: eine weitere Ausführungsform der Erfindung analog Fig. 8 bis 10;
- Fig. 13 bis 15: in den Fig. 4, 5 und 7 entsprechenden Ansichten eine Verbindungseinrichtung gemäß einem weiteren Ausführungsbeispiel der Erfindung;
- Fig. 16: eine Ansicht entsprechend Fig. 7 eines weiteren Ausführungsbeispiels der erfindungsgemäßen Verbindungseinrichtung;
- Fig. 17 bis 19: den Fig. 1 bis 3 entsprechende Ansichten eines spreizbaren Teils gemäß einem weiteren Ausführungsbeispiel der Erfindung;
- Fig. 20 und 21: eine Vorderansicht und die Draufsicht eines zum spreizbaren Teil nach Fig. 17 bis 19 passenden Spreizteils;
- Fig. 22: eine der Fig. 7 entsprechende Ansicht der Verbindungseinrichtung bei Anwendung der Teile nach Fig. 17 bis 21;
- Fig. 23: eine der Fig. 9 entsprechende Ansicht einer weiteren Ausführungsform der Erfindung; und
- Fig. 24: ein spezielles Werkzeug zum Zusammenfügen der Ausführungsform nach Fig. 23.

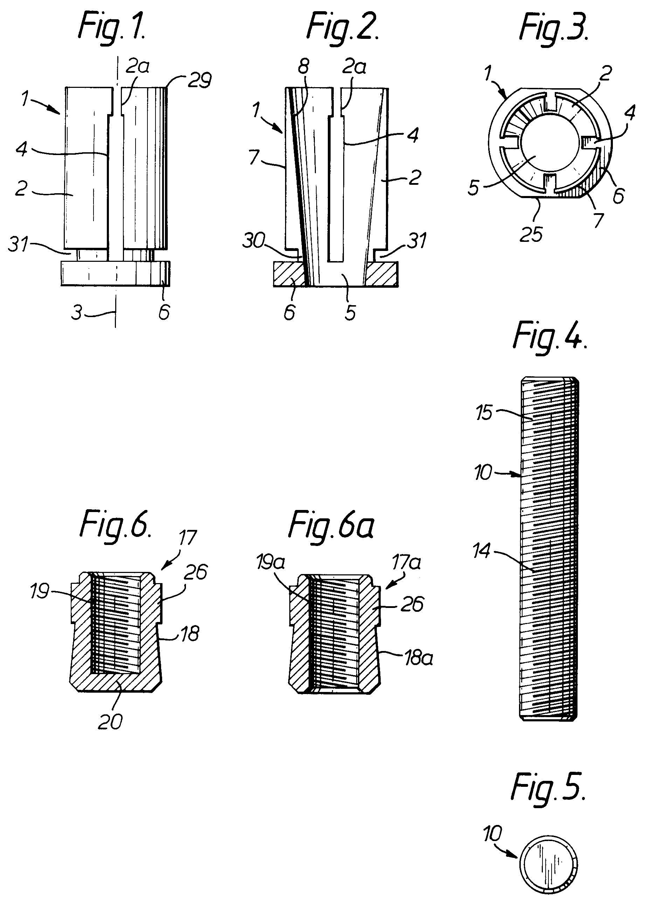

Nach Fig. 1 bis 3 enthält die Verbindungseinrichtung ein spreizbares, hülsenartig ausgebildetes Teil 1, das eine Mehrzahl von (hier vier) vorzugsweise identischen Segmenten 2 enthält, die durch parallel zu einer Längsachse 3 verlaufende, vorzugsweise um gleiche Winkel beabstandete Schlitze 4 getrennt sind. Die Segmente 2 weisen Außenflächen auf, die auf einer Zylinderfläche liegen und sich hier über etwas weniger als ein Viertel dieser Zylinderfläche erstrecken. Dagegen liegen die Innenflächen der Segmente 2 auf einer Konusfläche und erstrecken sich über etwas weniger als ein Viertel derselben. Dabei sind die Vorderenden der Segmente 2 mit einem geschlossenen, ein Mittelloch 5 aufweisenden Ring 6 derart verbunden, daß alle Außenflächen im wesentlichen eine gemeinsame, nur durch die Schlitze 4 getrennte, zylindrische äußere Mantelfläche 7 und ihre Innenflächen entsprechend eine gemeinsame, konische innere Mantelfläche 8 mit der Längsachse 3 als Achse bilden. Der Durchmesser der äußeren Mantelfläche 7 ist etwas kleiner als der Durchmesser einer Ausnehmung, in welcher das spreizbare Teil 1 befestigt werden soll. Die innere konische Mantelfläche 8 weist einen vom Hinterende in Richtung des vom Ring 6 gebildeten Vorderendes allmählich kleiner werdenden Durchmesser auf, wobei der Steigungswinkel α vorzugsweise nur wenige Grad, z.B. 5° beträgt.

Die Verbindungseinrichtung enthält nach Fig. 4 und 5 weiter einen Bolzen 10, der vorzugsweise als einfacher Gewindebolzen ausgebildet und zweckmäßig in der erforderlichen Länge von einer Gewindestange abgeschnitten ist.

Zusätzlich könnte der Bolzen 10 ein zum Ansetzen eines Werkzeugs bestimmtes Mittel aufweisen, z.B. einen Schlitz für einen Schraubendreher an seinem Vorderende. Zumindest an seinen beiden Enden ist der Bolzen 10 mit einem ersten Außengewindeabschnitt 14 und einem zur Herstellung der Verbindung dienenden Gewindeteil 15 in Form eines zweiten Außengewindeabschnitts versehen. Dabei ist im Ausführungsbeispiel der Außendurchmesser des Außengewindeabschnitts 14 etwas kleiner als der Innenquerschnitt des Mittellochs 5 des Rings 6 (Fig. 3).

Ein im wesentlichen hohlzylindrisches Spreizteil 17 der Verbindungseinrichtung ist nach Fig. 6 so geformt, daß es zumindest teilweise in das spreizbare Teil 1 einführbar ist. Zwecks Erzeugung einer ausreichend großen Flächenpressung ist das Spreizteil 17 mit einer äußeren konischen Spreizfläche 18 versehen, die im wesentlichen dieselbe Steigung wie die innere konische Mantelfläche 8 des spreizbaren Teils 1 (Steigungswinkel α in Fig. 2) und einen Durchmesser aufweist, der von ihrem Hinterende in Richtung des Vorderendes allmählich abnimmt. Dabei ist der kleinste Durchmesser etwas kleiner als der größte Durchmesser der inneren Mantelfläche 8 des spreizbaren Teils 1 und das Größenverhältnis vorzugsweise so gewählt, daß die äußere Spreizfläche 18 des Spreizteils 17 wenigstens etwa mit der Hälfte der Mantelfläche 8 in Berührung gebracht werden kann, so daß eine großflächige Wechselwirkung zwischen beiden Teilen 1 und 17 stattfindet. Beim Ausführungsbeispiel ist das Spreizteil 17 außerdem mit einem in Achsrichtung durchgehenden Innengewindeabschnitt 19 versehen, in den der erste Außengewindeabschnitt 14 des Bolzens 10 einschraubbar ist und der an einem zumindest teilweise geschlossenen Boden 20 endet. Alternativ kann ein entsprechend ausgebildetes Spreizteil 17a (Fig. 6a) auch keinen derartigen Boden 20 aufweisen.

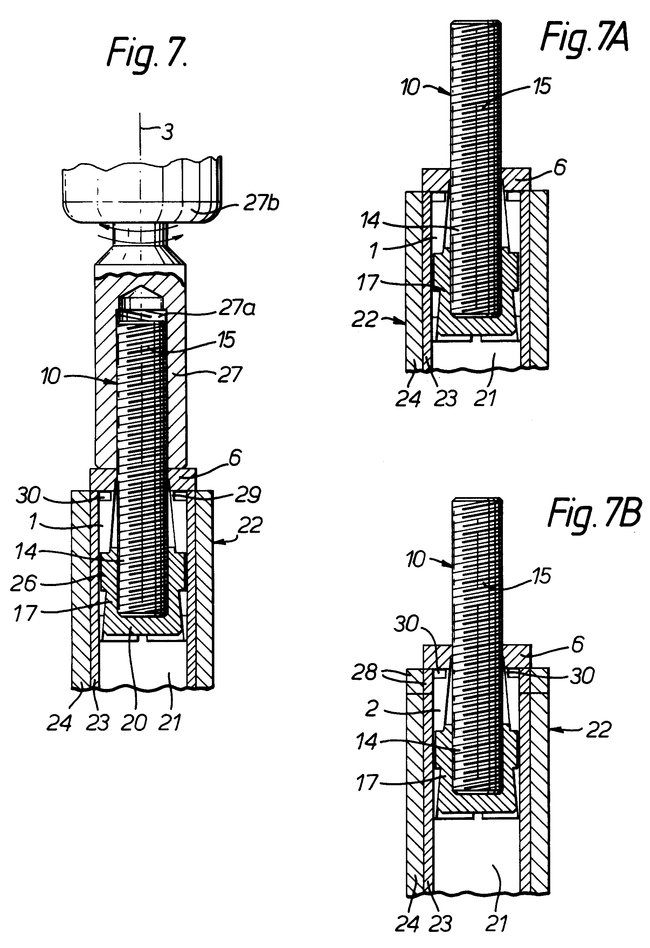

Fig. 7 zeigt die Verbindungseinrichtung im montierten Zustand in einer stirnseitigen, zylindrischen Ausnehmung 21 eines Bauteils 22, das im Ausführungsbeispiel aus einem Rohrelement mit einer hohlzylindrischen Metalleinlage 23 und einer auf diese aufgezogenen, ebenfalls hohlzylindrischen Kunststoffummantelung 24 besteht, die beide koaxial zur Längsachse 3 des spreizbaren Teils 1 und koaxial zu den Längsachsen des Bolzens 10 und des Spreizteils 17 angeordnet sind. Die Montage erfolgt dadurch, daß zunächst das Spreizteil 17 vom Hinterende her in das spreizbare Teil 1 geschoben und dann der Außengewindeabschnitt 14 von der Vorderseite her durch das Mittelloch 5 des Rings 6 hindurch in das Spreizteil 17 eingeschraubt wird. Danach wird das spreizbare Teil 1 in die Ausnehmung 21 eingeführt und ein Werkzeug 27 auf das Gewindeteil 15 des Bolzens 10 aufgeschraubt, bis sein freies Ende am Ring 6 anliegt. Das Werkzeug 27 besteht zweckmäßig aus einer Hülse mit einem auf das Gewindeteil 15 passenden Innengewinde 27a, wird beispielsweise in die Einspannvorrichtung eines üblichen Elektroschraubers 27b, einer elektrischen Handbohrmaschine od. dgl. eingesetzt und ist dann über die Einspannvorrichtung mit dessen (deren) Antriebsspindel verbunden, die über einen nicht dargestellten Schalter in beide, in Fig. 7 durch Pfeile angedeutete Drehrichtungen gedreht werden kann. Durch Einschalten des Elektroschraubers 27b wird nun das Werkzeug 27a im richtigen Drehsinn in Umdrehungen versetzt und dadurch der Bolzen 10 in das Innengewinde 27a bzw. das Werkzeug 27 hineingezogen, da sich das Werkzeug 27 am Ring 6 abstützt und daher in einer definierten Lage relativ zum spreizbaren Teil 1 angeordnet bleibt. Alternativ könnte sich das Werkzeug 27 allerdings auch an einer auf dem Ring 6 liegenden Unterlegscheibe, an der Metalleinlage 23 oder irgendeinem anderen, als Widerlager geeigneten Element abstützen, um dadurch beim Verspannen des Spreizteils 17 ein immer weiteres axiales Vorrücken des Werkzeugs 27 auf dem Bolzen 10 zu verhindern. Infolge dieser Maßnahme wird das Spreizteil 17 bei der Betätigung des Elektroschraubers 27 immer tiefer in das spreizbare Teil 10 hineingezogen, so daß dessen Segmente 2 radial nach außen gegen den zylindrischen Innenmantel der Metalleinlage 23 gedrückt werden. Die dabei auf den Bolzen 10 ausgeübte Zugkraft wird über die Spreizfläche 18 direkt auf die mit ihr zusammenwirkende Fläche 8 des spreizbaren Teils 1 übertragen und damit in eine quer zur Zugrichtung wirkende Kraft umgewandelt, so daß sich auch bei glatten Flächen hohe Klemmkräfte erzielen lassen. Nach dem Festziehen der Verbindung wird das Werkzeug 27 wieder vom Bolzen 10 gelöst, so daß das Gewindeteil 15 aus der Ausnehmung 21 axial nach außen vorsteht.

Um die Verbindungseinrichtung unter einer Vielzahl von denkbaren Betriebszuständen sicher in der Ausnehmung 21 befestigen zu können, sind vorzugsweise einige zusätzliche Hilfsmittel vorgesehen.

Zunächst wäre es, insbesondere bei glatten Innenflächen der Metalleinlage 23 und glatten Außenflächen des spreizbaren Teils 1 denkbar, daß das spreizbare Teil 1 und das Spreizteil 17 beim Drehen des Bolzens 10 einfach als Einheit in der Ausnehmung 21 mitgedreht werden. Um dieses zu verhindern, wird der Ring 6 zweckmäßig mit einem Werkzeug, z.B. einer Zange, festgehalten. Zur Erleichterung dieses Vorgangs ist der Ring 6 oder ein anderer, radial nach außen ragender Ansatz des spreizbaren Teils 1 so bemessen, daß er sich nach dem Einsetzen des Teils 1 in die Ausnehmung 21 auf deren Vorderende bzw. auf das Vorderende der Metalleinlage 23 auflegt und dadurch die normale Lage der Verbindungseinrichtung im Bauteil 22 fixiert - Außerdem kann dieser Ansatz oder der Ring 6 mit einem das Ansetzen eines Werkzeugs, z.B. eines Schraubenschlüssels, geeigneten Querschnitt versehen sein und beispielsweise wie das Element 11 seitliche Abflachungen 25 (Fig. 3) aufweisen. Alternativ könnten die äußere Mantelfläche des spreizbaren Teils 1 und/oder die innere zylindrische Mantelfläche der Metalleinlage 23 aber auch ausreichend aufgerauht sein, um ein Mitdrehen des spreizbaren Teils 1 wenigstens dann zu verhindern, wenn es durch das Spreizteil 17 schon etwas vorgespannt ist.

Damit sich der Bolzen 10 beim Aufdrehen des Werkzeugs 27 nicht einfach mit diesem mitdreht und immer tiefer in den Innengewindeabschnitt 19 des Spreizteils 17 eindringt, weist das Spreizteil 17 zur Herstellung der beschriebenen Verbindung zweckmäßig den Boden 20 nach Fig. 6 auf. Dadurch kann der Bolzen 10 zunächst so tief eingedreht werden, bis er am Boden 20 anliegt. Wird das Werkzeug 27 dann auf den Bolzen 10 aufgedreht, ist eine relative Drehung des Bolzens 10 zum Spreizteil 17 nicht mehr möglich.

Um schließlich ungewünschte Drehungen der aus dem Spreizteil 17 und dem Bolzen 10 bestehenden Einheit im spreizbaren Teil 1 zu vermeiden, ist die Verbindungseinrichtung mit einem Mittel versehen, das derartige Drehungen verhindert. Dieses Mittel ist z.B. aus einer in axialer Richtung wirksamen Nut/Feder-Verbindung gebildet, mittels derer das Spreizteil 17 drehfest im spreizbaren Teil 1 gelagert ist und die beispielsweise aus einem der Schlitze 4 (Fig. 1) und wenigstens einem seitlichen, radial abstehenden und in diesen Schlitz 4 ragenden Ansatz 26 (Fig. 6 und 7) besteht, der z.B. an das Spreizteil 17 angeformt oder als ein separater Stift ausgebildet ist, der in eine Bohrung des Spreizteils 17 eingeschlagen wird. Entsprechend ist die Wirkung des Rings 6 und der Nut/Feder-Verbindung, wenn die Verbindungseinrichtung wieder demontiert werden soll.

Anstelle der Hülse kann als Werkzeug 27 auch eine einfache Mutter verwendet werden, die soweit auf den Bolzen 10 gedreht wird, bis sie dem Ring 6 aufliegt. Das Festziehen kann dann mit einem entsprechend ausgebildeten Elektroschrauber erfolgen. Die Mutter oder eine einen entsprechenden Querschnitt aufweisende Hülse könnte aber auch mit einem Schraubenschlüssel, einer Zange od. dgl. festgezogen werden. Schließlich kann in beiden Fällen vorgesehen sein, einen Drehmomentbegrenzer vorzusehen, um das spreizbare Teil 1 stets mit einem vorgewählten Drehmoment festzuziehen.

Wie Fig. 7A zeigt, kann das Bauteil 22 auf einfache Weise gekürzt werden. Hierzu wird dem Bolzen 10 mit einem Hammer od. dgl. ein Schlag in axialer Richtung versetzt, wodurch das Spreizteil 17 im spreizbaren Teil 1 axial verschoben wird, bis die Verspannung gelöst ist. Die ganze Verbindungseinrichtung kann nun aus der Ausnehmung 21 herausgezogen werden. Das Bauteil 22 wird dann, wie in Fig. 7A angedeutet ist, an seinem Vorderende etwas verkürzt, und anschließend wird die Verbindungseinrichtung wieder eingesetzt. Da sie danach wieder dieselbe relative Lage zum Vorderende des Bauteils 22 einnimmt, ergeben sich auch dieselben statischen Verhältnisse. Voraussetzung ist dabei natürlich, daß die Ausnehmung 21 lang genug ist, um auch nach der Verkürzung die Teile 1,17 aufnehmen zu können.

Das Bauteil 22 kann auch auf einfache Weise verlängert werden (Fig. 7 B). Hierzu wird ein kurzes, ebenfalls aus einer Metalleinlage und einer Kunststoffummantelung bestehendes, rohrförmiges Bauteil 28 koaxial auf das Vorderende des Bauteils 22 aufgelegt und danach die Verbindungseinrichtung eingesetzt und in der beschriebenen Weise befestigt. Dabei kommt ein Vorderabschnitt des spreizbaren Teils 1 im Bauteil 22 zu liegen, so daß das Teil 1 gleichzeitig als Zentrierelement wirkt. Die axiale Länge des spreizbaren Teils 1 ist daher vorzugsweise so groß, z.B. wenigstens ca. 40 mm, daß ein Teil dieser Länge für etwa notwendige Verlängerungen verwendet werden kann, ohne daß die mechanische Stabilität aufgrund des kürzeren, im Bauelement 22 verbleibenden Abschnitts des Teils 1 wesentlich abnimmt. Alternativ wäre es natürlich auch möglich, zusätzliche Verbindungseinrichtungen mit besonders großer Länge herzustellen, die speziell der Verlängerung von Bauteilen dienen.

Zur Herstellung von Verbindungen, die hohen statischen Anforderungen entsprechen müssen, z.B. bei Geländern, Brüstungen od. dgl., bestehen das spreizbare Teil 1, der Bolzen 10 und das Spreizteil 17 vorzugsweise aus Stahl. Dadurch wird sichergestellt, daß die Verbindungseinrichtungen in Kombination mit den Metalleinlagen 23 ein auch im Brandfall erhalten bleibendes Skelett bilden. Um dabei zu vermeiden, daß die Außenflächen der Segmente 2 beim Spreizvorgang im wesentlichen nur mit ihren Hinterenden 29 (Fig. 1) und daher nur mit Linien- oder sogar Punktberührung im jeweiligen Anschlußende verklemmt werden, sind die Segmente 2 an ihren Vorderenden vorzugsweise mit Hilfe von verformbaren Teilen 30 mit dem Ring 6 verbunden. Diese verformbaren Teile 30 bestehen vorzugsweise aus dünnen Verbindungsstegen oder Wandabschnitten, die dadurch entstehen, daß zwischen dem Ring 6 und der von den Segmenten 2 gebildeten äußeren Mantelfläche 7 durch Drehen oder Fräsen eine Rille 31 bzw. Nut (Fig. 1 und 2) ausgebildet wird, die bis dicht an die innere Mantelfläche 8 heranreicht. Wird bei dieser Anordnung entsprechend Fig. 7 durch Festziehen des Bolzens 10 ein radialer Druck erzeugt, dann können die Segmente 2 unter Verbiegung der verbieg- oder verformbaren Teile 30 praktisch auf ihrer ganzen Länge gegen die zylindrische Innenwand der Metalleinlage 23 gepreßt werden, so daß aufgrund des großflächigen Kontakts und der damit verbundenen großen Flächenpressung die erwünschte große Reibkraft auch dann erzeugt wird, wenn die zusammenwirkenden Flächen glatt sind.

Alternativ kann das spreizbare Teil 1 auch aus Kunststoff hergestellt sein. In diesem Fall kommt eine großflächige Berührung zwischen den Teilen 1 und 17, 17a dadurch zustande, daß durch geeignete Wahl des Kunststoffmaterials und der Anmessungen des spreizbaren Teils 1 dessen Sektoren 2 eine ausreichende Eigenelastizität gegeben wird. Daher können sowohl weniger Schlitze 4 (z.B. drei) vorgesehen sein als auch zusätzliche verformbare Teile entsprechend den Teilen 30 (Fig. 2) fehlen.

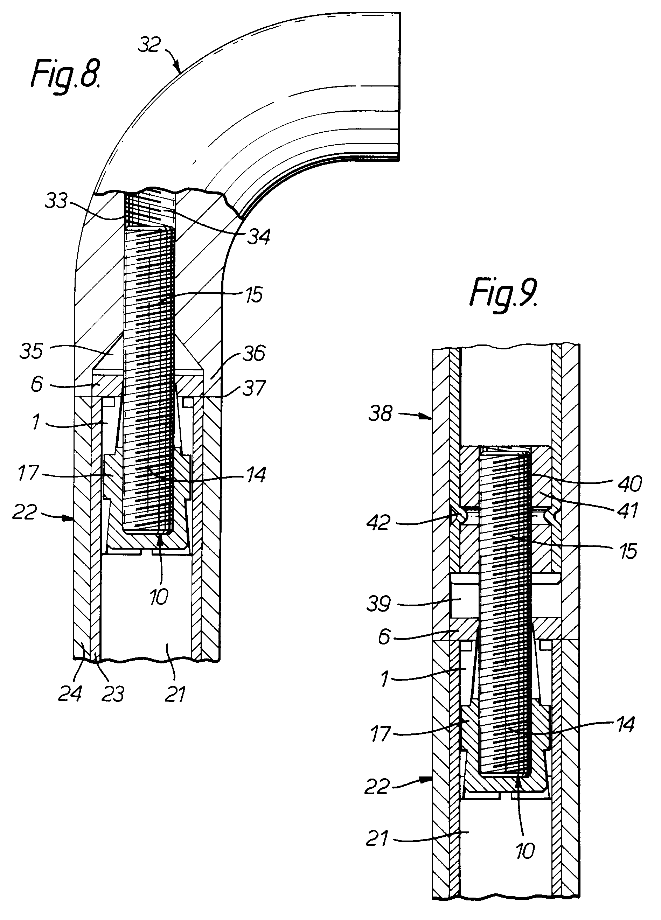

Nachdem die Verbindungseinrichtung im Bauteil befestigt ist, kann dieses auf herkömmliche Weise mit einem anderen Bauteil 32 (Fig. 8) verbunden werden, das z.B. aus einem bogenförmigen, aus Kunststoff hergestellten Knotenelement besteht, das ein koaxial zum Bauteil 22 ausrichtbares Ende und eine darin ausgebildete, mit einem Innengewindeabschnitt 33 versehene Ausnehmung 34 aufweist, in die das Gewindeteil 15 des Bolzens 10 eingedreht werden kann (DE-OS 26 32 696). Die Ausnehmung 34 weist an ihrem Vorderende außerdem eine das Element 11 aufnehmende Erweiterung 35 auf.

Um das Bauteil 32 koaxial zum Bauteil 22 zentrieren zu können, ist der Ring 6 vorzugsweise gleichzeitig als Zentrierstück ausgebildet und mit einem Außenquerschnitt versehen, der bis auf die Abflachungen 25 dem Innenquerschnitt desjenigen Wandabschnitts 36 am Vorderende des Bauteils 32 entspricht, der durch die Ausbildung der Erweiterung 35 entstanden ist. Die axiale Länge dieses Wandabschnitts 36 wird so groß bemessen, daß der Ring 6 auch bei Bildung einer haarfeinen Stoßfuge 37 in der Erweiterung 35 Platz finden.

Wie ein Vergleich der Fig. 7A, 7B und 8 zeigt, hat die beschriebene Ausgestaltung des Rings 6 sowohl als Zentrierstück als auch als Ansatz, der sich auf das Bauteil 22 auflegt, den Vorteil, daß diese Funktion auch nach dem Verkürzen oder Verlängern des Bauteils 22 erhalten bleibt. Dadurch wird beim Verlängern kein zusätzliches Zentrierstück erforderlich. Weil bei dieser Anordnung außerdem kein aus der Kunststoffummantelung 24 herausragender Abschnitt der Metalleinlage 23 als Zentrierstück benötigt wird, ergibt sich der weitere wesentliche Vorteil, daß die Metalleinlage 23 und die Kunststoffummantelung 24 dieselbe axiale Länge erhalten und gemeinsam an die Stoßfuge 37 grenzen können. Hierdurch ist es möglich, die Bauteile 22 ohne vorherige Trennung der Kunststoffummantelung 24 von den Metalleinlagen 23 zu verkürzen oder entsprechend Fig. 7B mittels einfacher Zwischenstücke zu verlängern.

Unabhängig davon ist es möglich, die Bauteile 22 in bekannter Weise zu verspannen, indem z.B. das in Fig. 7 und 8 nicht sichtbare andere Ende des Rohrelements mittels einer entsprechenden Verbindungseinrichtung mit einem dem Bauteil 32 entsprechenden weiteren Bauteil verschraubt und dann die verschiebbar auf der Metalleinlage 23 sitzende Kunststoffummantelung 24 durch Annähern der beiden Knotenelemente gestaucht wird, indem sich deren Wandabschnitte 36 nur auf die Kunststoffummantelung 24 auflegen. Alternativ oder zusätzlich könnten aber auch die Wandabschnitte 36 ausreichend dünn ausgebildet werden und bei der Verspannung als verformbare Teile wirken.

Beim Losdrehen der aus Fig. 8 ersichtlichen Verbindung könnte unter ungünstigen Umständen der Bolzen 10 mit dem Bauteil 32 mitdrehen und sich dadurch vom Spreizteil 17 lösen. Ein unbeabsichtigt auf das Spreizteil 17 ausgeübter Schlag könnte dann zur Folge haben, daß dieses im Bauteil 22 herabfällt. Ist dessen anderes Ende z.B. im Erdboden einbetoniert, wäre das Spreizteil 17 verloren. Ein derartiges Lösen des Spreizteils wird in weiterer Ausgestaltung der Erfindung dadurch verhindert, daß es unverlierbar mit dem spreizbaren Teil 1 verbunden wird, indem bei diesem einer der Schlitze 4 an seinem Hinterende verschlossen und ein dem Ansatz 26 entsprechender Stift erst nach dem Einsetzen des Spreizteils 17 in das spreizbare Teil 1 eingeschlagen wird. Um zu vermeiden, daß dadurch die Spreizfähigkeit des Spreizteils 17 vermindert wird, ist wenigstens ein solcher Schlitz vorzugsweise zusätzlich in einem der Segmente 2 angebracht. Ein Herabfallen der ganzen Verbindungseinrichtung wird durch die Auflage des Rings 6 auf der Metalleinlage 23 verhindert.

Eine in der Herstellung einfachere Variante hierzu besteht darin, daß an dem Hinterende 28 wenigstens eines Segments 2 eine kleine, radial nach innen ragende Nase 2a (Fig. 1 und 2) angebracht wird. Beim Einlegen des Spreizteils 17 werden die Hinterenden der Segmente 2 dann radial so stark gespreizt, daß das Spreizteil 17 über die Nasen 2a in das spreizbare Teil 1 geschoben werden kann. Danach federn die Hinterenden 28 zurück und verriegeln das Spreizteil 17 im spreizbaren Teil 1, was insbesondere auch für den montierten Zustand gilt, so daß das Spreizteil 17 unverlierbar in der Verbindungseinrichtung gehalten ist.

Ein völliges Eindrehen des Bolzens in das Spreizteil 17 oder gar ein Herabfallen des Bolzens im Bauteil 22 kann schließlich mit Hilfe des Bodens 20 verhindert werden.

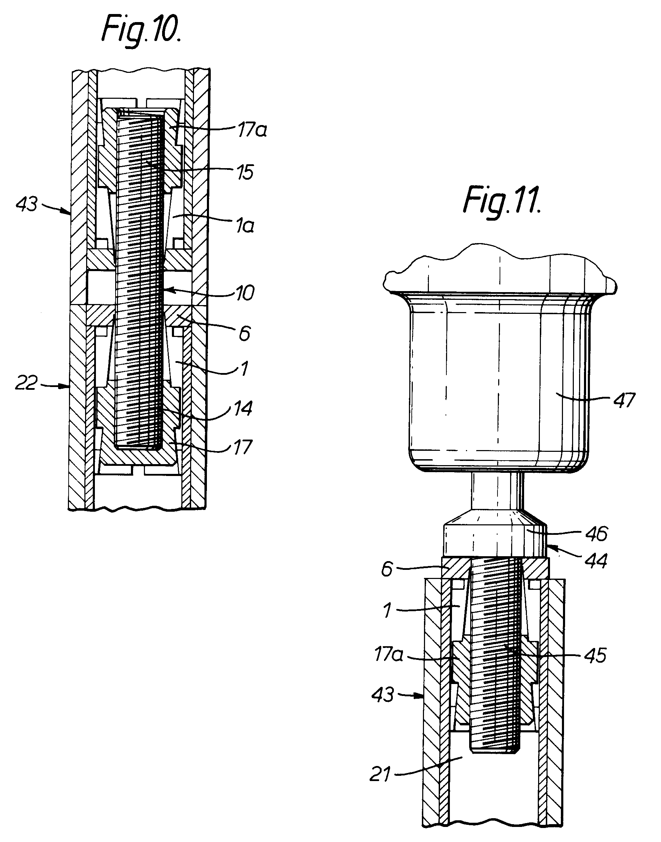

Nach Fig. 9 kann das mit der Verbindungseinrichtung versehene Bauteil 22 auch mit einem anderen rohrförmigen Bauteil 38 verbunden werden, sofern dessen Anschlußende eine den Ring 6 als Zentrierstück aufnehmende Ausnehmung 39 und einen entsprechenden Innengewindeabschnitt 40 zur Aufnahme des Gewindeteils 15 aufweist. Dieser ist z.B. in einem Füllstück 41 ausgebildet, das in bekannter Weise mittels Eindrückungen 42 im Bauteil 38 fixiert ist. Alternativ wäre es auch denkbar, zunächst ein weiteres spreizbares Teil 1a (Fig. 10) und ein weiteres Spreizteil 17a mit Hilfe des Bolzens 10 in einem Bauteil 43 zu fixieren, dann den Bolzen 10 wieder herauszudrehen, ohne das Spreizteil 17a aus dem spreizbaren Teil 1a herauszuschlagen, danach die Verbindungseinrichtung in der beschriebenen Weise im Bauteil 22 zu befestigen und schließlich das Gewindeteil 15 in das Spreizteil 17a einzudrehen. Eine derartige Anordnung ist allerdings in statischer Hinsicht nicht immer ausreichend stabil, da die Gefahr besteht, daß das Spreizteil 17a beim Entstehen einer kleinen Fuge zwischen den Bauteilen 43 und 22 und bei Ausübung eines Schlags auf eines derselben im spreizbaren Teil 1a etwas axial verschoben und dadurch die Verbindung gelöst wird. Im übrigen wird hier im Bauteil 43 vorzugsweise das Spreizteil 17a nach Fig. 6a verwendet, das keinen Boden 20 aufweist, damit das Gewindeteil 15 ausreichend tief eingedreht werden kann.

Fig. 11 zeigt eine bevorzugte Ausführungsform für die Montage des Spreizteils 17a in dem Bauteil 43. Hierzu wird zunächst entsprechend Fig. 7 mit dem Unterschied vorgegangen, daß in den Innengewindeabschnitt 19a des Spreizteils 17a ein Werkzeug 44 eingedreht wird, das aus einem passenden Gewindestift 45 und einem daran anschließenden, verbreiterten Kopfteil 46 besteht, das auf dem Ring 6 abgestützt werden kann und z.B. einen Sechskantquerschnitt besitzt. Nachdem der Gewindestift 45 so weit in das Spreizteil 17a eingedreht ist, daß das Kopfteil 46 auf dem Ring 6 aufliegt, kann das Kopfteil 46 mittels eines Schraubenschlüssels, einer Zange, eines Elektroschraubers 47 od. dgl. in Umdrehungen versetzt werden, wodurch das Spreizteil 17a immer tiefer in das spreizbare Teil 1 hineingezogen und die Verbindung damit festgezogen wird. Anschließend wird der Gewindestift 45 wieder aus dem Spreizteil 17a herausgedreht, so daß das Bauteil 43 als sogenanntes Lochteil ausgebildet ist und mit dem als sogenanntes Stiftteil ausgebildeten Bauteil 22 analog zu Fig. 9 verbunden werden kann. Dabei versteht sich, daß ein entsprechendes Spreizteil 17a natürlich auch in einem Knotenelement, d.h. z.B. im Bauteil 32 nach Fig. 8 befestigt werden könnte.

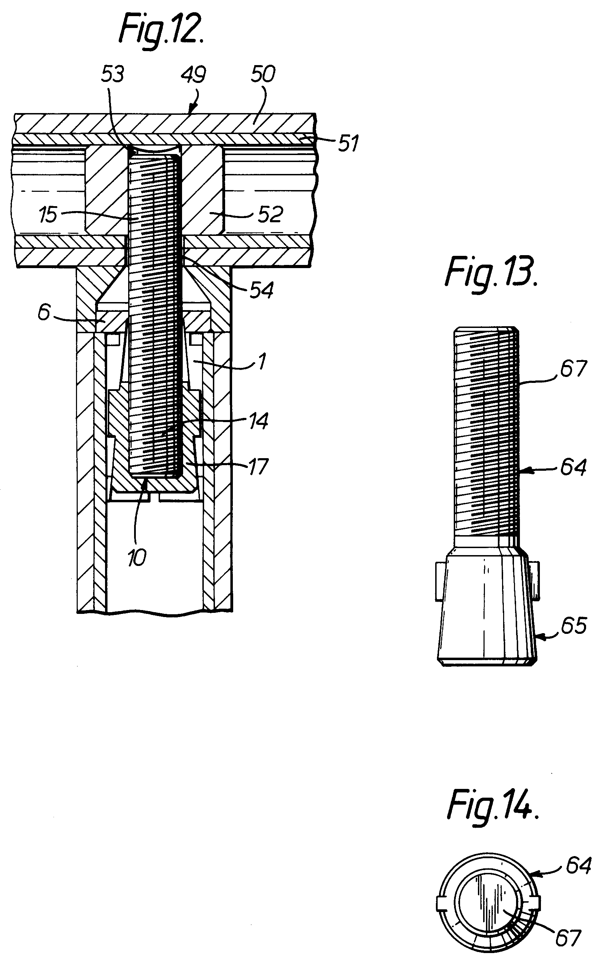

Fig. 12 zeigt die Verbindung des Bauteils 22 mit einem Bauteil 49 unter Bildung eines T-förmigen Anschlusses. Das Bauteil 49 besteht aus einer hohlzylindrischen Kunststoffummantelung 50 und einer in diese eingebrachten hohlzylindrischen Metalleinlage 51, in die ein Füllstück 52 mit einem Innengewindeabschnitt 53 eingesetzt und z.B. mittels eines Klebers befestigt ist. Der Innengewindeabschnitt 53 weist eine senkrecht zur Längsachse des Bauteils 49 verlaufende Achse auf und ist auf ein in der Metalleinlage 51 und in der Kunststoffummantelung 50 ausgebildetes Montageloch 54 ausgerichtet, durch das hindurch das Gewindeteil 15 des Gewindebolzens 10 in den Innengewindeabschnitt 53 eingedreht wird.

Nach einer besonders bevorzugten Ausführungsform wird das Spreizteil 17 nach Fig. 6 aus Kunststoff hergestellt, z.B. aus einem glasfaserverstärktem Nylon. Hierdurch wird beim Festziehen des Bolzens 10 erreicht, daß die beim Spreizvorgang radial nach außen gerichtete Klemmkraft nicht lediglich durch ein im wesentlichen starres Spreizteil 17 aufgefangen wird. Das Spreizteil 17 kann sich vielmehr geringfügig verformen, insbesondere im Bereich seines Innengewindeabschnitts 19, wodurch die Schraubverbindung zwischen diesem und dem Bolzen 10 schwergängig wird. Damit wird sichergestellt, daß diese Verbindung insbesondere schwergängiger wird als die Verbindung zwischen dem Bolzen 10 und dem Werkzeug 27 (Schrauber, Mutter od. dgl.) und daher das Werkzeug 27 nach dem Festziehen leicht vom Bolzen 10 abgeschraubt werden kann, ohne daß dabei der Bolzen 10 mitgenommen und dadurch die herzustellende Verbindung zwischen dem spreizbaren Teil 1 und dem Bauteil 22 wieder gelöst wird. Dies ist u.a. auch eine Folge davon, daß der Bolzen 10 und das Werkzeug 27 in der Regel aus Metall, insbesondere Stahl, bestehen. Ein weiterer Vorteil dieser Maßnahme besteht darin, daß der Bolzen 10 beim Lösen einer Verbindung zwischen zwei Bauteilen (Fig. 8 bis 10) in der Regel fest in demjenigen Bauteil 22 angeordnet bleibt, das als Stiftteil verwendet wird.

Im jeweils anderen Bauteil 32, 43 bzw. 49 (Lochteil) wird dagegen vorzugsweise ein Spreizteil 17a nach Fig. 6a verwendet, das aus Metall, insbesondere Stahl besteht. Dadurch wird vermieden, daß der Innengewindeabschnitt 19a beim Eindrehen des Werkzeugs 45 (Fig. 1) so stark verformt, beschädigt oder zerstört wird, daß das nachträgliche Einführen des Bolzens 10 behindert wird oder unmöglich ist.

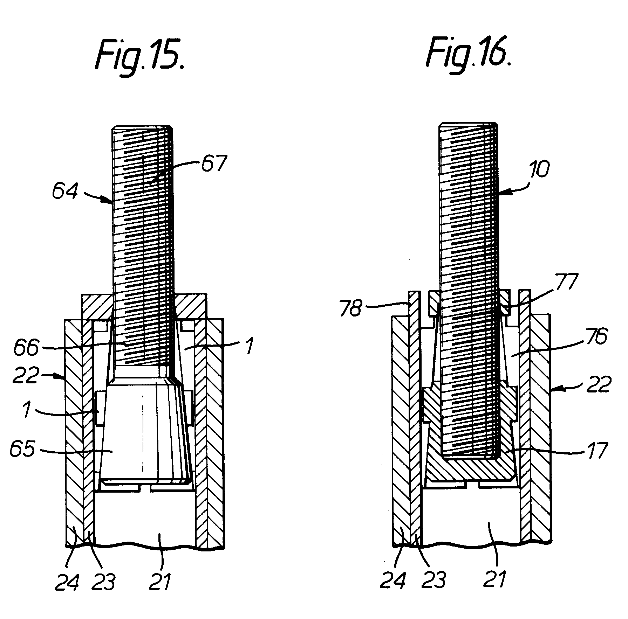

Die Ausführungsform nach Fig. 13 bis 15 unterscheidet sich von den bisherigen Ausführungsformen dadurch, daß ein Bolzen 64 und ein Spreizteil 65 fest miteinander verbindbar oder fest miteinander verbunden und dazu beispielsweise aus einem Stück hergestellt sind. Der Bolzen 64 weist einen wie beim Bolzen 10 durchgehenden Außengewindeabschnitt 67 auf, dessen Vorderteil das zur Verbindung der beiden Bauteile dienende Gewindeteil bildet. Auf den Außengewindeabschnitt 67 wird dabei analog zu Fig. 7 ein Werkzeug in Form einer Gewindehülse, einer Mutter od. dgl. aufgeschraubt, um das Spreizteil 65 in das spreizbare Teil 1 hineinzuziehen. Außerdem kann das Spreizteil 65, das im übrigen dem Spreizteil 17 entspricht und im wesentlichen hülsenartig oder zylindrisch ausgebildet sein kann, mit einem dem Ansatz 26 (Fig. 6) entsprechenden, seitlichen Ansatz 68 versehen werden, um es undrehbar und ggfs. unverlierbar im spreizbaren Teil 1 anzuordnen.

Fig. 16 zeigt eine Ausführungsform, die der nach Fig. 7 ähnlich ist und sich von dieser durch ein anderes spreizbares Teil 76 unterscheidet. Das Teil 76 weist am Vorderende einen Ring 77 auf, der keinen so großen Querschnitt hat, daß er sich auf das Vorderende des Bauteils 22 auflegen und/oder als Zentrierstück für ein anderes Bauteil wirken könnte. Daher erfolgt bei diesem Beispiel die Zentrierung in bekannter Weise mittels der Metalleinlage 23, die am Vorderende etwas über die Kunststoffummantelung 24 vorsteht und ein Zentrierstück 78 bildet. Im übrigen ist die Anordnung analog zu Fig. 7. Dabei ist der Ring 77 zweckmäßig so ausgebildet, daß er von außen mit einem gekröpften Schraubenschlüssel, einem Steckschlüssel od. dgl. selbst dann noch erfaßt werden kann, wenn er entsprechend Fig. 16 ganz oder teilweise im Anschlußende des Bauteils 22 versenkt angeordnet ist.

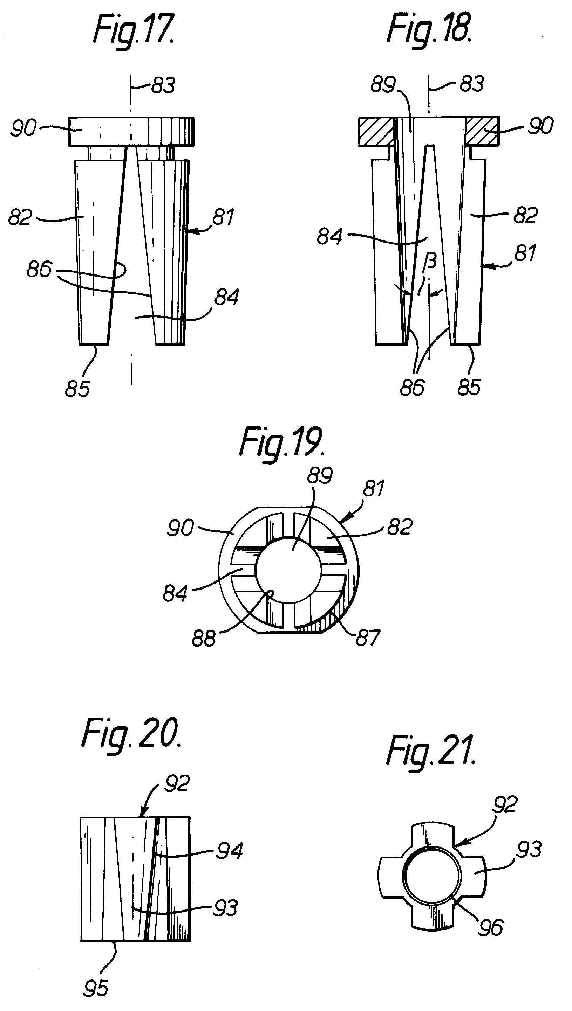

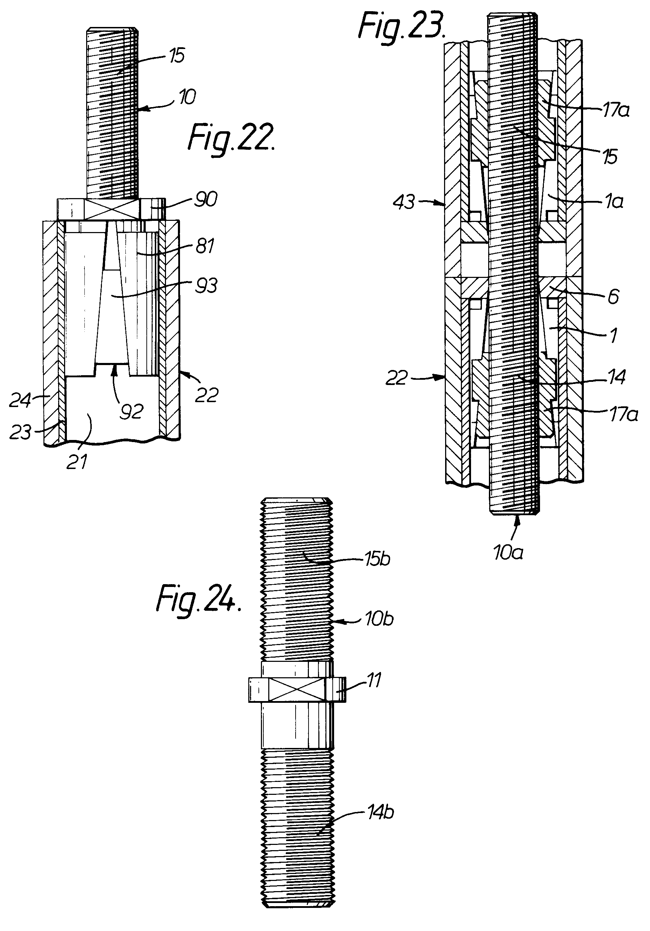

Bei der Ausführungsform nach Fig. 17 bis 22 ist ein spreizbares Teil 81 vorgesehen, das hülsenartig ausgebildet ist und eine Mehrzahl von (hier vier) vorzugsweise identischen Segmenten 82 enthält. Im Gegensatz zu Fig. 1 bis 3 sind diese Segmente 82 nicht durch exakt parallel zu einer Längsachse 83 verlaufende Schlitze, sondern durch Schlitze 84 getrennt, die sich zwar in Längsrichtung des spreizbaren Teils 81 erstrecken, aber keilförmig ausgebildet sind. Wie Fig. 17 und 18 zeigen, haben die Schlitze 84 im Längsschnitt etwa die Form eines gleichschenkeligen Dreiecks, dessen Grundseite am Hinterende 85 des Teils 81 liegt und dessen beiden Schenkel durch die entsprechend schräg zur Längsachse 83 verlaufenden Seitenflächen 86 der Segmente 82 gebildet sind. Ein Keilwinkel β (Fig. 24) beträgt vorzugsweise nur wenige Grad, z.B. 5°.

Die Segmente 82 besitzen im übrigen äußere Mantelflächen 87, die auf einer Zylinderfläche liegen, sowie Innenflächen 88, die abweichend von Fig. 1 bis 3 ebenfalls im wesentlichen auf einer Zylinderfläche angeordnet sind und sich wie die Mantelflächen 87 jeweils über etwas weniger als ein Viertel dieser Zylinderfläche erstrecken. Die Vorderenden der Segmente 82 sind analog zu Fig. 1 bis 3 mit einem geschlossenen, ein Mittelloch 89 aufweisenden Ring 90 verbunden.

Zur Spreizung des spreizbaren Teils 81 weist die Verbindungseinrichtung nach Fig. 20 und 21 ein im wesentlichen hohlzylindrisches Spreizteil 92 auf, das so geformt ist, daß es zumindest teilweise in das spreizbare Teil 81 einführbar ist. Zwecks Erzeugung einer ausreichend großen Spreizwirkung ist das Spreizteil 92 dort, wo das spreizbare Teil 81 die Schlitze 84 aufweist, mit radial vorstehenden, keilförmigen Ansätzen 93 versehen, deren Seitenflächen als Spreizflächen 94 wirken und in ihrer Form an die Seitenflächen 86 des spreizbaren Teils 81 angepaßt sind. Diese Ansätze 83 werden wie die Schlitze 84 vom Hinterende 95 des Spreizteils 92 in Richtung von dessen Vorderende allmählich schmaler (Fig. 20), wobei die Abmessungen der Spreizflächen 94 zweckmäßig denen der Seitenflächen 86 der Schlitze 84 entsprechen, so daß sich eine großflächige Wechselwirkung beim Spreizvorgang ergibt. Dabei ist die Breite der Ansätze 93 am Vorderende des Spreizteils 92 vorzugsweise um so viel kleiner als die Schlitzbreite am Hinterende des spreizbaren Teils 81, daß die Spreizteile 92 entsprechend Fig. 22 von hinten her in den spreizbaren Teilen 81 und entsprechend die Ansätze 93 von hinten her in den Schlitzen 84 so weit vorgeschoben werden können, bis die Ansätze 83 wenigstens etwa zur Hälfte in den Schlitzen 84 angeordnet sind und dadurch eine hohe Radialkraft auf das spreizbare Teil 81 ausüben können. Beim Ausführungsbeispiel ist das Spreizteil 92 außerdem mit einem in Achsrichtung durchgehenden Innengewindeabschnitt 96 (Fig. 21) versehen, in den der erste Außengewindeabschnitt 14 des Bolzens 10 (Fig. 4) eingeschraubt werden kann.

Fig. 22 zeigt die Verbindungseinrichtung im montierten Zustand in der zylindrischen Ausnehmung 21 des Bauteils 22, das entsprechend Fig. 7 ausgebildet ist. Die Montage erfolgt auch bei diesem Ausführungsbeispiel dadurch, daß zunächst das Spreizteil 92 vom Hinterende her in das spreizbare Teil 81 geschoben, dann der Außengewindeabschnitt 14 von der Vorderseite her durch das Mittelloch 89 des Rings 90 hindurch lose in das Spreizteil 92 eingeschraubt und danach das spreizbare Teil 81 in die Ausnehmung 21 eingeführt wird. Abschließend wird der Bolzen 10 mittels eines angesetzten Werkzeugs analog zu Fig. 7 festgezogen, wodurch das Spreizteil 92 immer tiefer in das spreizbare Teil 81 hineingezogen wird. Die Spreizflächen 94 legen sich dabei an die innen zugewandten Seitenflächen 86 der Segmente 82 an und drücken diese dadurch immer mehr in Umfangsrichtung auseinander und folglich radial nach außen gegen den zylindrischen Innenmantel der Metalleinlage 23. Bei diesem Ausführungsbeispiel kann das spreizbare Teil 81 mit um so mehr Flächenpressung in der Ausnehmung 21 verspannt werden, je größer die Zahl der Schlitze 84 und Ansätze 93 bzw. der zusammenwirkenden Flächen 86,94 ist.

Die Verbindungseinrichtung nach Fig. 17 bis 22 kann in allen Varianten hergestellt und benutzt werden, die oben anhand Fig. 7A bis 16 für die Verbindungseinrichtung nach Fig. 1 bis 7 beschrieben und beansprucht sind. Die Anwendung der Ansätze 26 (Fig. 6) ist allerdings überflüssig, weil die in die Schlitze 84 eingreifenden Ansätze 93 gleichzeitig die gewünschte Drehsicherung bilden.

Die Erfindung ist nicht auf die beschriebenen Ausführungsbeispiele beschränkt, die sich auf vielfache Weise abwandeln lassen. Beispielsweise wäre es möglich, auch die Verspannung des Spreizteils 17a im spreizbaren Teil 1 (Fig. 7) mit Hilfe des Werkzeugs 44 vorzunehmen, das analog zu Fig. 11 in einen Elektroschrauber 47 eingespannt ist. Wie schon anhand Fig. 10 kurz erläutert wurde, kann das Spreizteil 17a in der zugehörigen Ausnehmung irgendeines Bauteils zunächst z.B. mit Hilfe des Werkzeugs 44 so fest angezogen werden, daß das spreizbare Teil fest in der Ausnehmung verankert ist. Wird jetzt das Werkzeug 44 wieder gelöst, bleibt das spreizbare Teil so lange fest verankert, wie kein Stoß auf das Spreizteil ausgeübt wird. Es wäre daher möglich, das Werkzeug 44 völlig herauszudrehen, dann den Bolzen 10 einzudrehen, diese Vorgehensweise bei Bedarf bei einem anderen Bauteil zu wiederholen und dann die beiden Bauteile miteinander zu verbinden. Sind die beiden Bauteile erst einmal fest miteinander verbunden und ggf. durch weitere Bauteile auch miteinander verspannt, dann ist ein unbeabsichtigtes Lösen der beiden Bauteile nicht mehr möglich. Daher können einfache Bauelemente wie Handtuchstangen, Pendeltürgriffe oder auch Teile von größeren Konstruktionen wie z.B. Geländern oder Brüstungen dadurch im Werk oder auch an einer Baustelle vormontiert werden, daß zunächst die spreizbaren Teile mit Hilfe des Werkzeugs 44 fest in den Bauteilen verankert und dann mit Hilfe der Bolzen 10 fest miteinander verbunden werden.

Eine solche Variante ist insbesondere in Fig. 23 und 24 angedeutet, die sich von dem Ausführungsbeispiel nach Fig. 10 im wesentlichen dadurch unterscheidet, daß in beiden Bauteilen 22 und 43 ein Spreizteil 17a nach Fig. 6a verwendet wird, das den Boden 20 nach Fig. 6 nicht aufweist, und daß ein besonders langer Bolzen 10a in Form eines durchgehenden Gewindebolzens vorgesehen ist. Dabei werden beide Spreizteile 17a entsprechend Fig. 11 zunächst mit Hilfe des Werkzeugs 44 im zugehörigen Bauteil 22, 43 befestigt und fest verankert, so daß zwei Lochteile entstehen. Danach wird das Werkzeug 44 entfernt. Daraufhin wird der Bolzen 10a z.B. mit der Hand in das Spreizteil 17a des einen Bauteils, z.B. 22, so tief eingedreht, daß er das Spreizteil 17a ausreichend tief durchsetzt. Anschließend wird das Spreizteil 17a des anderen Bauteils, z.B. 43, auf den noch vorstehenden Abschnitt, hier 15, des Bolzens 10a aufgedreht, wobei dieser so lange mit der Hand festgehalten wird, bis er auch das Spreizteil des Bauteils 43 ausreichend tief durchsetzt. Dies ist wegen seiner aus Fig. 23 ersichtlichen Länge ohne weiteres möglich. Zum Schluß werden die beiden Bauteile 22 und 43 weiter relativ zueinander verdreht, bis sie mit ihren Stirnflächen aneinanderstoßen. Dabei ist gleichgültig, ob der Bolzen 10a bei diesem Vorgang tiefer in das eine oder andere Spreizteil eindringt, weil er ja schon zuvor ausreichend tief in diese eingedreht wurde und in Abhängigkeit von den zufällig vorhandenen Reibungsverhältnissen allenfalls noch tiefer in das eine und/oder andere Spreizteil eindringen kann.

Zum Festziehen der Spreizteile 17a kann, wie oben schon erwähnt wurde, alternativ ein Werkzeug in Form einer Schraube verwendet werden, deren Kopf sich auf dem Ring 6 abstützen kann und die mit einem Schraubenschlüssel, einem Schrauber od. dgl. betätigt wird. Als weitere Alternative kann ein Werkzeug in Form eines in Fig. 24 dargestellten Bolzens 10b vorgesehen sein, der in einem mittleren Teil einen zur Abstützung auf dem Ring 6 bestimmten Bund oder Kragen 11 aufweist, der gleichzeitig als Vier- oder Sechskant ausgebildet sein kann und mit einem Schraubenschlüssel, einer Zange od. dgl. betätigt wird. Der Bolzen 10b weist auf beiden Seiten des Bundes 11 Außengewindeabschnitte 14b, 15b mit gleichen oder unterschiedlichen Durchmessern und/oder Steigungen auf, so daß die Außengewindeabschnitte 14b, 15b zur Montage von Spreizteilen 17a mit denselben oder unterschiedlichen Innengewindeabschnitten geeignet sind.

Weiter kann das spreizbare Teil mehr oder weniger als die dargestellten axialen Schlitze 4 bzw. 84 aufweisen. Insbesondere ist es auch möglich, das spreizbare Teil durch zwei oder mehr Segmente 2 bzw. 82 zu bilden, die voneinander getrennt, d.h. nicht durch den Ring 6 bzw. 90 od. dgl. verbunden sind, in welchem Fall auch bei Segmenten aus Stahl keine besonderen verformbaren Teile vorgesehen werden müßten. Hierbei bietet sich insbesondere die Anwendung von zwei aus Halbschalen bestehenden Segmenten an. Weiter wäre es möglich, die Metalleinlage 23 kürzer als die Kunststoffummantelung 24 auszubilden und analog zu Fig. 16 anstelle des Rings 77 eine die Stoßfuge überbrückende separate Zentrierhülse od. dgl. vorzusehen. Weiterhin wäre es möglich, mit der beschriebenen Verbindungseinrichtung auch zwei Knotenelemente direkt miteinander zu verbinden, indem diese je nach Fall mit entsprechenden Aufnahmeöffnungen für die beschriebenen spreizbaren Teile und/oder mit Innengewindeabschnitten 33 versehen werden. Dabei ist auch denkbar, die Rohre und/oder Knotenelemente an ihren Enden mit unterschiedlichen Aufnahmeöffnungen zu versehen.

Möglich wäre außerdem, die Erweiterungen 35 (Fig. 8) so groß auszubilden, daß wahlweise ein spreizbares Teil in die Erweiterung oder ein Gewindeteil in den Innengewindeabschnitt 33 eingeführt werden kann. Ferner ist es möglich, die Formen der Innenquerschnitte der Ausnehmungen und der Außenquerschnitte der spreizbaren Teile zumindest teilweise unterschiedlich zu wählen, d.h. z.B. mit zylindrischen Ausnehmungen zusammenwirkende, spreizbare Teile vorzusehen, deren Außenquerschnitte sechs- oder achteckig ausgebildet sind. Auch insoweit brauchen sich die entsprechenden Durchmesser bzw. Querschnitte nur im wesentlichen zu entsprechen. Das Maß an Übereinstimmung wird dabei hauptsächlich durch die zu übertragenden Kräfte bzw. die zu erzielende Stabilität der Verbindung und die im Einzelfall verwendeten Materialien bestimmt sein.

Weiterhin können zur Vermeidung des Mitdrehens des Bolzens 10 beim Abschrauben des Werkzeugs 27 andere Mittel als Kunststoffgewinde vorgesehen werden, um sicherzustellen, daß die Klemmung zwischen dem Außengewindeabschnitt 14 des Bolzens 10 und dem Innengewindeabschnitt 19, 19a des Spreizteils 17,17a nach dessen Festziehen größer als die Klemmung zwischen dem Gewindeteil 15 des Bolzens 10 und dem Innengewindeteil des verwendeten Werkzeugs 27 ist. Derartige Mittel, die im Rahmen der vorliegenden Anmeldung unter der Bezeichnung erste Verdrehsicherungen zusammengefaßt sind, können beispielsweise aus wenigstens einem im Spreizteil 17,17a angebrachten und dieses flexibel machenden Längsschlitz, aber auch aus einem chemischen Mittel , z.B. einem aufgebrachten Tropfen aus Kunststoff oder anderen Materialien, einem leicht konisch ausgebildeten Innengewindeabschnitt 19 bzw. 19a, einer eingelegten Nylonschnur oder sonstigen, die Schwergängigkeit erhöhenden Maßnahmen bzw. Manipulationen an den zusammenwirkenden Gewindeteilen bestehen. Bei der Ausführungsform nach Fig. 13 bis 15 ergibt sich diese Drehsicherung automatisch durch die starre Verbindung des Bolzens 64 mit dem Spreizteil 65, da dieses nach dem Festziehen durch die zwischen dem Bolzen 10 und dem Werkzeug 27 bei dessen Losdrehen wirksamen Kräfte nicht vom spreizbaren Teil gelöst werden kann, insbesondere wenn der Bolzen 10 und das Werkzeug 27 wie üblich aus Stahl bestehen und/oder zusätzlich die Schlitze 4 (Fig. 1) und Ansätze 26 (Fig. 6) vorgesehen sind.

Weiterhin ist es möglich, anstelle des Bodens 20 (Fig. 6) andere Mittel vorzusehen, die verhindern, daß der Bolzen 10 unerwünscht tief in das Spreizteil 17 eingedreht werden kann. Diese Mittel können z.B. aus einem zwischen dem Außengewindeabschnitt 14 und dem Gewindeteil 15 des Bolzens 10 befindlichen, gewindelosen Abschnitt, aus einer entsprechend angeordneten Unterbrechung des Gewindes durch Anbringung einer Kerbe, Rändelung oder anderen Ungleichförmigkeiten oder aus sonstigen zweiten Drehsicherungen bestehen, die das Weiterdrehen des Bolzens 10 im Innengewindeabschnitt 19 des Spreizteils 17 nach einer vorgewählten Eindringtiefe unmöglich machen. Durch alle diese Maßnahmen bzw. Manipulationen an den zusammenwirkenden Teilen läßt sich dieselbe Wirkung wie mit dem Boden 20 erzielen, so daß bei Anbringung einer solchen zweiten Drehsicherung auch ein Spreizteil 17a nach Fig. 6a vorgesehen werden könnte. Im Unterschied zu den ersten Drehsicherungen, die dem Zweck dienen, ein ungewolltes Zurückdrehen des Bolzens 10 nach dem Festziehen der Verbindungseinrichtung zu verhindern, dienen daher die zweiten Drehsicherungen der Verhinderung eines zu tiefen Eindringens des Bolzens 10 in das Spreizteil 17.

Die Erfindung umfaßt schließlich auch alle nicht ausdrücklich erwähnten möglichen Kombinationen zwischen den verschiedenen Elementen sowie die anhand der Fig. 7, 11, 23 und 24 erläuterten Verfahrensweisen des einfachen Festziehens der Verbindungseinrichtung mit Hilfe eines Elektroschraubers od. dgl. unter Einschluß einer im Bedarfsfall vorgesehenen Drehmomentbegrenzung.

## Patentansprüche

1. Verbindungseinrichtung für ein insbesondere rohrförmiges Bauteil, das wenigstens ein eine Ausnehmung aufweisendes Anschlußende besitzt, das mittels einer unsichtbaren, vorzugsweise durch Schrauben herstellbaren Verbindung unter Bildung einer Stoßfuge mit einem Anschlußende eines anderen Bauteils verbindbar ist, ggfs. unter Zwischenschaltung eines dritten, rohrförmigen Bauteils und Bildung einer weiteren Stoßfuge, enthaltend: ein zumindest mit seinem Hinterende in die Ausnehmung einsetzbares, hülsenförmig ausgebildetes spreizbares Teil, ein Spreizteil mit einer Spreizfläche, die mit einer an diese angepaßten Fläche des spreizbaren Teils großflächig zusammenwirkt, und einen zum Festziehen des Spreizteils bestimmten Bolzen, dadurch gekennzeichnet, daß der Bolzen (10,10a) ein durchgehender Gewindebolzen ist.

2. Verbindungseinrichtung nach Anspruch 1, dadurch gekennzeichnet, daß das Spreizteil (17,17a) einen Innengewindeabschnitt (19,19a) aufweist, in den der Bolzen (10,10a) einschraubbar ist.

3. Verbindungseinrichtung nach Anspruch 1 oder 2, dadurch gekennzeichnet, daß das Spreizteil (17,65) und/oder der Bolzen (10,64) mit einer ersten, ein Zurückdrehen des Bolzens (10,64) im Spreizteil (17,65) erschwerenden oder verhindernden Drehsicherung versehen ist.

4. Verbindungseinrichtung nach einem der Ansprüche 1 bis 3, dadurch gekennzeichnet, daß die erste Drehsicherung aus einem aus Kunststoff bestehenden Innengewindeabschnitt (19) des Spreizteils (17) besteht.

5. Verbindungseinrichtung nach einem der Ansprüche 1 bis 4, dadurch gekennzeichnet, daß die erste Drehsicherung durch eine Manipulation am Innengewindeabschnitt (19) des Spreizteils (17) und/oder eines Außengewindeabschnitts des Bolzens (10) erhalten ist.

6. Verbindungseinrichtung nach einem der Ansprüche 1 bis 5, dadurch gekennzeichnet, daß das Spreizteil (17,17a) und/oder der Bolzen (10) mit einer zweiten, ein zu tiefes Eindringen des Bolzens (10) in den Innengewindeabschnitt (19) des Spreizteils (17,17a) verhindernden Drehsicherung (20) versehen ist.

7. Verbindungseinrichtung nach einem der Ansprüche 1 bis 5, dadurch gekennzeichnet, daß die zweite Drehsicherung aus einem am Spreizteil (17) ausgebildeten Boden (20) besteht.

8. Verbindungseinrichtung nach einem der Ansprüche 1 bis 7, dadurch gekennzeichnet, daß das spreizbare Teil (1,76,81) mit wenigstens einem in seiner Längsrichtung verlaufenden Schlitz versehen und dadurch spreizbar ist und einen im wesentlichen dem Innendurchmesser der Ausnehmung entsprechenden Durchmesser aufweist.

9. Verbindungseinrichtung nach Anspruch 8, dadurch gekennzeichnet, daß das Spreizteil (17,92) zumindest teilweise in das spreizbare Teil (1,76,81) einführbar ist.

10. Verbindungseinrichtung nach Anspruch 9, dadurch gekennzeichnet, daß das Spreizteil (17,92) mit wenigstens einer zum radialen Aufweiten des spreizbaren Teils bestimmten Spreizfläche versehen ist.

11. Verbindungseinrichtung nach Anspruch 9 oder 10, dadurch gekennzeichnet, daß der Bolzen (10) zur axialen Verschiebung des Spreizteils (17,92) im spreizbaren Teil (1,76,81) und dadurch zur radialen Verspannung des spreizbaren Teils in der Ausnehmung dient.

12. Verbindungseinrichtung nach einem der Ansprüche 3 bis 11, dadurch gekennzeichnet, daß die erste Drehsicherung dadurch erhalten ist, daß der Bolzen (64) starr mit dem Vorderende des Spreizteils (65) verbunden ist.

13. Verbindungseinrichtung nach Anspruch 12, dadurch gekennzeichnet, daß der Bolzen (64) und das Spreizteil (65) aus einem Stück gefertigt sind.

14. Verbindungseinrichtung nach einem der Ansprüche 1 bis 13, dadurch gekennzeichnet, daß das Gewindeteil (15) aus einem am Vorderende des Bolzens (10) ausgebildeten Außengewindeabschnitt besteht.

15. Verbindungseinrichtung nach einem der Ansprüche 1 bis 14, dadurch gekennzeichnet, daß sie ein Mittel aufweist, das eine Drehung des Spreizteils (17,65) im spreizbaren Teil (1,76,81) verhindert.

16. Verbindungseinrichtung nach Anspruch 15, dadurch gekennzeichnet, daß das Mittel nach Art einer Nut/Feder-Verbindung ausgebildet ist.

17. Verbindungseinrichtung nach Anspruch 16, dadurch gekennzeichnet, daß das Mittel wenistens einen achsparallelen Schlitz (4) oder eine achsparallele Nut im spreizbaren Teil (1) und eine in den Schlitz (4) oder die Nut ragenden Ansatz (26) am Spreizteil (17,17a) enthält.

18. Verbindungseinrichtung nach Anspruch 16 oder 17, dadurch gekennzeichnet, daß der Schlitz (4) am Hinterende geschlossen oder zumindest eines der Segmente (2) am Hinterende mit einer Nase (2a) versehen ist.

19. Verbindungseinrichtung nach einem der Ansprüche 1 bis 18, dadurch gekennzeichnet, daß das spreizbare Teil aus zwei oder mehr voneinander getrennten Schalen gebildet ist.

20. Verbindungseinrichtung nach einem der Ansprüche 1 bis 19, dadurch gekennzeichnet, daß das spreizbare Teil (1) aus wenigstens zwei Segmenten (2) besteht, die durch wenigstens einen achsparallelen Schlitz (4) getrennt sind und gemeinsam die konische innere Mantelfläche (8) und eine im wesentlichen zylindrische äußere Mantelfläche (7) bilden, und daß das Spreizteil (17) eine mit der inneren Mantelfläche zusammenwirkende, äußere Spreizfläche (18) aufweist.

21. Verbindungseinrichtung nach einem der Ansprüche 1 bis 19, dadurch gekennzeichnet, daß das spreizbare Teil (81) aus wenigstens zwei Segmenten (82) besteht, die durch wenigstens einen keilförmig ausgebildeten, von Seitenflächen (86) begrenzten Schlitz (84) getrennt sind und eine im wesentlichen zylindrische äußere Mantelfläche (87) bilden, und daß das Spreizteil (92) wenigstens einen in den Schlitz (84) einführbaren Ansatz (93) mit seitlichen, mit den Seitenflächen (86) zusammenwirkenden Spreizflächen (94) aufweist.

22. Verbindungseinrichtung nach Anspruch 20 oder 21, dadurch gekennzeichnet, daß die Segemente (2,82) mit einem am Vorderende des spreizbaren Teils (1,76,81) ausgebildeten Ring (6,77,90) zusammengehalten sind.

23. Verbindungseinrichtung nach Anspruch 22, dadurch gekennzeichnet, daß der Ring (6,90) einen zur Abstützung am Vorderende des Anschlußendes des Bauteils (22) geeigneten Querschnitt besitzt.

24. Verbindungseinrichtung nach Anspruch 22 oder 23, dadurch gekennzeichnet, daß der Ring (6,77,90) einen zum Ansetzen eines Werkzeugs geeigneten Querschnitt aufweist.

25. Verbindungseinrichtung nach einem der Ansprüche 22 bis 24, dadurch gekennzeichnet, daß der Ring (6,90) als Zentrierstück für das andere Bauteil ausgebildet ist.

26. Verbindungseinrichtung nach einem der Ansprüche 1 bis 25, dadurch gekennzeichnet, daß das spreizbare Teil (1,76,81) aus Stahl oder Kunststoff besteht.

27. Verbindungseinrichtung nach einem der Ansprüche 1 bis 26, dadurch gekennzeichnet, daß die Segmente (2) an ihren Vorderenden mittels verformbarer Teile (30) mit dem Ring (6) verbunden sind.

28. Verbindungseinrichtung nach Anspruch 27, dadurch gekennzeichnet, daß die verformbaren Teile (30) aus dünnen Verbindungsstegen oder Wandteilen bestehen.

29. Verfahren zum Verbinden von zwei Bauteilen mit einer Verbindungseinrichtung nach einem oder mehreren der Ansprüche 1 bis 28, daduch gekennzeichnet, daß in die Ausnehmung (21) des einen Bauteils (22) zunächst mit Ausnahme des Bolzens (10,10a) eine Verbindungseinrichtung eingesetzt, deren Spreizteil (17) mittels eines eingedrehten Werkzeugs (10b,44) im zugehörigen spreizbaren Teil (1,76,81) festgezogen und dieses dadurch in der Ausnahmung (21) verklemmt wird und daß nach dem Herausdrehen des Wekzeugs (10b,44) je ein Ende des Bolzens (10,10a) bis zu einer vorgewählten Tiefe in das Spreizteil (17) und in das zugeordnete Anschlußende des anderen Bauteils (32,38,43,49) eingedreht und abschließend beide Bauteile durch relatives Verdrehen zueinander zumindest so weit angenähert werden, bis sie mit ihren Anschlußenden aneinander stoßen.

30. Verfahren nach Anspruch 29, dadurch gekennzeichnet, daß in die Ausnehmungen beider beteiligten Bauteile (22,43) mit Ausnahme des Bolzens (10,10a) je eine Verbindungseinrichtung nach einem oder mehreren der Ansprüche 1 bis 28 eingesetzt wird und deren Spreizteile (17) dann mittels eines Werkzeugs (10b,44) festgezoen werden, und daß nach dem Herausdrehen des Werkzeugs beide Enden des Bolzens (10,10a) bis zu einer vorgewählten Tiefe in die Spreizteile (17) beider Bauteile (22,43) eingedreht und diese dann durch relative Verdrehung zueinander zumindest so weit angenähert werden, bis sie mit ihren Anschlußenden aneinander stoßen.
